# EUROPÄISCHE PATENTSCHRIFT

(11) **EP 0 466 745 B1**
(45) Veröffentlichungstag und Bekanntmachung des Hinweises auf die Patenterteilung: **27.07.1994**
(21) Anmeldenummer: 90905463.7
(22) Anmeldetag: 05.04.1990
(51) Int. Cl.: F16D 65/853, F16D 55/40, B60T 1/06

(54) **FLÜSSIGKEITSGEKÜHLTE LAMELLENBREMSE**
nIQUID-COOLED MULTIPLE-DISC BRAKE
FREIN MULTIDISQUES REFROIDI PAR UN LIQUIDE

(30) Priorität: 08.04.1989 DE 3911517
(43) Veröffentlichungstag der Anmeldung: 22.01.1992
(73) Patentinhaber: ZF FRIEDRICHSHAFEN Aktiengesellschaft, 88038 Friedrichshafen (DE)
(72) Erfinder: SCHEIBER, Friedrich, D-8391 Tiefenbach (DE); BIER, Waldemar, D-8390 Passau 17 (DE); SONNLEITNER, Hermann, D-8395 Hauzenberg (DE); KÜHNER, Karl, D-7990 Friedrichshafen (DE); LOMMEL, Albrecht, D-7990 Friedrichshafen (DE)
(86) Internationale Anmeldenummer: EP9000537
(87) Internationale Veröffentlichungsnummer: WO9012218

(56) Entgegenhaltungen:
- EP-A- 0 076 387
- DE-A- 3 732 760
- DE-B- 1 249 104
- GB-A- 2 041 480
- GB-A- 2 091 359
- GB-A- 2 142 103
- US-A- 2 816 630

## Beschreibung

Die Erfindung bezieht sich auf eine flüssigkeitsgekühlte Lamellenbremse, bei der auf einer Antriebswelle ein innerer Lamellenträger drehfest zur Abstützung von inneren Bremslamellen gelagert ist und äußeren Bremslamellen, die an einem äußeren Lamellenträger abgestützt sind, einer zum inneren Lamellenträger, der als Förderrad ausgebildet ist, führenden Zuleitung für Kühlmittel, das durch radial verlaufende Kanäle des inneren Lamellenträgers den inneren und äußeren Bremslamellen zuströmt und über eine Ableitung des äußeren Lamellenträgers abfließt.

Flüssigkeitsgekühlte Lamellenbremsen der eingangs genannten Art werden auf dem Gebiet der Antriebstechnik häufig verwendet. Bevorzugt werden derartige Lamellenbremsen insbesondere bei schweren Nutzfahrzeugen, wie beispielsweise Radladern, eingesetzt. Bekanntlich unterliegen derartige Nutzfahrzeuge extremen Einsatzbedingungen. Dementsprechend hoch belastet werden auch die flüssigkeitsgekühlten Lamellenbremsen. Es ist nicht außergewöhnlich, daß beispielsweise bei einem Radlader im Betriebsfall "Laden" die Lamellenbremsen bis zu siebenmal in der Minute bei voller Motorleistung betätigt werden. Bei einer derartigen Belastung kann es nicht verwundern, daß das Kühlmittel hohe Grenztemperaturen erreichen kann, was insbesondere bei unzureichendem Kühlmitteldurchsatz und hohen Außentemperaturen der Fall sein wird.
Aus der DE-OS 37 32 760 ist eine Reibungsbremse mit Flüssigkeitskühlung bekannt geworden, bei der das Kühlmittel einem Ringraum zugeführt wird, worauf es anschließend zwischen den Lamellen einer Lamellenbremse unter Ausnutzung der Fliehkraft nach außen geschleudert wird. Der Kühlmittelumlauf ist von der Betätigung der Lamellenbremse abhängig, da während des Schließens bzw. Öffnens der Lamellenbremse die Zuleitung geöffnet bzw. geschlossen wird. Dies ist nachteilig, weil die Temperaturerhöhung der Lamellenbremse mit zeitlicher Verzögerung erfolgt. Hinzu kommt, daß der Kühlmitteldurchsatz durch das Lamellenpaket der Lamellenbremse zu langsam erfolgt. Das zur Verfügung stehende Kühlmittelvolumen ist unzureichend und heizt sich demzufolge unter ungünstigen Bedingungen schnell auf hohe Temperaturen auf.

Aus der europäischen Patentschrift 00 76 387 B1 ist eine Fahrzeugachse mit einem Kühlmittelkreislauf bekanntgeworden, bei dem eine Pumpe für den Zwangsumlauf des Kühlmittels sorgt. Das Kühlmittel wird durch die Pumpe über ein Saugrohr aus einem Sammelbehälter angesaugt und über weitere Rohrleitungen dem Lamellenpaket der Lamellenbremse zugeführt. Bei der Pumpe handelt es sich um ein relativ aufwendiges, teures Bauteil, das von Fremdkörpern besonders sorgfältig abgeschirmt werden muß. Dies erfolgt bei der vorbekannten Lösung durch das Einschalten eines Filters, der den bekanntlich relativ hohen Anteil von Fremdkörpern im umlaufenden Kühlmittel von der Pumpe fernhalten soll. Um eine zuverlässige Funktion zu gewährleisten, ist eine Kontrolle des Filters notwendig, was einen erhöhten Wartungsaufwand bedeutet.

Aus der britischen Patentanmeldung 20 91 359 A ist ferner ein Radkopf für Triebräder von Fahrzeugen bekanntgeworden, bei dem die Radnabe, in der ein Planetengetriebe und eine Lamellenbremse untergebracht ist, mit Kühlmittel teilweise gefüllt ist. Die Radnabe ist auf einer Hohlachse drehantreibbar gelagert und wird von einer Antriebswelle durchsetzt. Zwischen der Antriebswelle und der Hohlachse wird ein Ringspalt gebildet, durch den das Kühlmittel dem Radkopf zufließt. Der Ringspalt mündet in eine Querbohrung in der Antriebswelle. Durch eine in Längsrichtung der Antriebswelle verlaufende Bohrung wird eine Verbindung zwischen der Querbohrung und radial verlaufenden Kanälen in der Antriebswelle und einem Lamellenträger, der Bestandteil des inneren Zentralrads des Planetengetriebes ist, hergestellt. Das an der Peripherie der Lamellenbremse austretende Kühlmittel wird über Öffnungen in einem Hohlradträger des Planetengetriebes abgeleitet. Bei dieser Anordnung ist die Gestaltung der Zuleitung für das Kühlmittel einerseits in fertigungstechnischer Hinsicht aufwendig und andererseits in bezug auf die Festigkeit der Antriebswelle nachteilig. Ferner muß eine externe Pumpe - mit den vorstehend erwähnten Nachteilen - eingesetzt werden, um das Kühlmittel umzuwälzen.

Aus der US-A-28 16 630 ist eine flüssigkeitsgekühlte Lamellenbremse bekanntgeworden, die einem nicht-angetriebenen Vorderrad zugeordnet ist. Der Träger der Innenlamellen ist Bestandteil einer Flügelzellenpumpe, die bei Betätigung der Lamellenbremse für den Umlauf des Kühlmittels sorgt. Die Anordnung ist aufwendig und hat zudem den Nachteil, daß es nach einem Bremsvorgang zu örtlichen Überhitzungen kommen kann, weil der Kühlmittelkreislauf unterbrochen ist.

Der vorliegenden Erfindung liegt die Aufgabe zugrunde, den Kühlmitteldurchsatz und die Intensität der Kühlmittelumwälzung bei einer flüssigkeitsgekühlten Lamellenbremse der eingangs genannten Art zu verbessern. Zudem soll die Anordnung gegenüber Fremdkörpereinwirkung unempfindlich sein.

Die der Erfindung zugrundeliegende Aufgabe wird dadurch gelöst, daß die Zuleitung als Ringspalt ausgeführt ist. Im Bereich des Übergangs des Kühlmittels in das Förderrad weist der Lamellenträger einen dem Ringspalt im wesentlichen gleich ausgebildeten Einlaufspalt auf, der - bezogen auf eine Längsmittelebene der Antriebswelle - dem Ringspalt mit geringem axialen Abstand gegenüberliegt. Dieser geringe Abstand bewirkt eine sichere Führung des Kühlmittels und vermeidet Verwirbelungen im Bereich dieses Übergangs. Der Lamellenträger ist so angeordnet, daß das Kühlmittel das Förderrad im Bereich der Antriebswelle axial anströmt. Eine derartige Zuleitung des Kühlmittels hat zudem den großen Vorteil, daß der Querschnitt der Antriebswelle voll erhalten bleibt, das heißt nicht geschwächt wird.

Nach einem weiteren vorteilhaften Merkmal der Erfindung bildet der Einlaufspalt den Beginn eines ringförmigen Förderspalts des Förderrads, der einen - bezogen auf die Längenstreckung der Antriebswelle - im wesentlichen axial gerichteten Abschnitt aufweist, der in einen radial gerichteten Abschnitt übergeht, der an seinem außen liegenden Ende durch einen Bund des Lamellenträgers begrenzt wird, wobei die radial verlaufenden Kanäle den Bund durchsetzen (Anspruch 2). Die Gestaltung des Förderrads gewährleistet eine strömungstechnisch günstige Umleitung des Kühlmittels vom Mündungsbereich des Ringspalts zum Bund des Lamellenträgers, von wo es in die Bremslamellen der Lamellenbremse eintritt.

Der Kühlmitteldurchsatz läßt sich durch die Anordnung und Ausgestaltung von Förderelementen im Förderspalt beeinflussen. Vorzugsweise verlaufen die Förderelemente - gesehen in Draufsicht auf das Förderrad - radial gerichtet. Die radial gerichteten Förderelemente gewährleisten eine zuverlässige Förderung des Kühlmittels in beiden Drehrichtungen des Lamellenträgers (Anspruch 3).

Eine fertigungstechnisch günstige Lösung besteht darin, daß der Lamellenträger aus zwei Bauteilen zusammengefügt ist, die in der Weise miteinander verbunden sind, daß - bezogen auf die Längenstreckung der Antriebswelle - ihr axialer Abstand voneinander durch Abstandshalter, die die Innenweite des radial gerichteten Abschnitts des Förderspalts bestimmen, festgelegt ist (Anspruch 4). Besonders einfach wird die Anordnung, wenn die Förderelemente auch als Abstandshalter ausgebildet sind (Anspruch 5) und Gewindebohrungen aufweisen, in die Befestigungsschrauben einschraubbar sind (Anspruch 6). Die beiden Bauteile des Lamellenträgers lassen sich in einfacher Weise miteinander verschrauben. Es ist jedoch möglich, anstelle einer Schraubverbindung auch eine Nietverbindung zu verwenden.

Eine fertigungstechnisch einfache Lösung besteht nach einem weiteren Merkmal der Erfindung darin, daß ein Bauteil des Lamellenträgers ein Ring ist, der mit seinem Außendurchmesser in einer Eindrehung am Bund des Lamellenträgers zentriert ist und dessen Innendurchmesser mit dem Außendurchmesser des Einlaufspalts identisch ist (Anspruch 7).

Eine weitere Vereinfachung läßt sich durch die Verbindung der Förderelemente mit dem Ring zu einem gemeinsamen Bauteil erzielen (Anspruch 8).

Nach einem weiteren Merkmal der Erfindung weist der Lamellenträger auf der dem Einlaufspalt gegenüberliegenden Seite Durchtrittsöffnungen auf, die - bezogen auf die Längenerstreckung der Antriebswelle - im wesentlichen axial gerichtet verlaufen (Anspruch 9). Bei Vorwärts- bzw. Rückwärtsfahrt rotiert der Lamellenträger mit der Drehzahl der Antriebswelle, so daß durch die Durchtrittsöffnungen normalerweise kein Kühlmittel zu- bzw. abgeführt wird. Erst wenn der Lamellenträger stillsteht, bewirken die Durchtrittsöffnungen einen Kurzschluß mit dem Einlaufspalt des Pumpenlaufrads bzw. dem unmittelbar axial gegenüberliegenden Ringspalt. Über die geschilderte Verbindung kann das Kühlmittel zügig abfließen, womit eine schnelle Wärmeabfuhr gewährleistet ist.

Die in den Unteransprüchen 10 und 11 vorgeschlagenen Maßnahmen dienen dazu, den schnellen Abfluß des Kühlmittels zusätzlich zu fördern.

Die in den Unteransprüchen 12 und 13 vorgeschlagenen Maßnahmen dienen dem Zweck, den Durchsatz des Kühlmittels durch die inneren und äußeren Bremslamellen der Lamellenbremse zu fördern. Die vorgeschlagene Ausgestaltung der inneren und äußeren Bremslamellen führt dazu, daß die Wirkung des Förderlaufrads zusätzlich unterstützt wird. Hierbei ist die Tatsache, daß in beiden Drehrichtungen des Lamellenträgers Kühlmittel gefördert wird, besonders vorteilhaft.

Bei Einsatz der Lamellenbremse in einem Radkopf, dessen Hohlradträger mit einer Außenverzahnung formschlüssig in eine Innenverzahnung des Hohlrads eingreift, ist es, um den Abfluß des Kühlmittels zu fördern, besonders vorteilhaft, daß die Außenverzahnung des Hohlradträgers in Längsrichtung verlaufende und am Umfang des Hohlradträgers verteilte Durchlässe für das Kühlmittel aufweist (Anspruch 14).

Um eine wirksame Ableitung des Kühlmittels herbeizuführen, ist es nach einem weiteren Merkmal der Erfindung vorteilhaft, daß die Durchlässe in einen Sammelring münden, der mit der Ableitung für das Kühlmittel verbunden ist (Anspruch 15).

Die in den Unteransprüchen 17, 18 und 19 vorgeschlagenen Maßnahmen befassen sich mit der Zuleitung des Kühlmittels zum Förderrad. In strömungstechnischer Hinsicht ist es vorteilhaft, die Außenwandung des Ringspalts in Richtung auf den Lamellenträger kelchartig zu erweitern (Anspruch 17).

Die Zuleitung des Kühlmittels kann ausschließlich über den Ringspalt erfolgen (Anspruch 18).

Möglich ist ferner, die Zuleitung des Kühlmittels über eine durch die Hohlachse geführte, parallel zur Antriebswelle verlaufende Zuleitung, die in den Ringspalt mündet, vorzunehmen (Anspruch 19). In diesem Zusammenhang sei erwähnt, daß die Zuleitung vorzugsweise im Bereich der kelchartigen Erweiterung der Außenwandung des Ringspalts mündet.

Bei einem vorteilhaften Ausführungsbeispiel der Erfindung wird eine schnelle Wärmeabfuhr dadurch erreicht, daß der Ablauf des Kühlmittels aus einem Radkopf bei stehender Antriebswelle außer über die durch den Hohlradträger geführte Ableitung über die Durchtrittsöffnungen des Lamellenträgers, den Einlaufspalt des Förderspalts und den Ringspalt erfolgt (Anspruch 20).

Eine weitere bauliche Vereinfachung der Anordnung läßt sich bei einem weiteren Ausführungsbeispiel der Erfindung dadurch erzielen, daß anstelle der durch den Hohlradträger führenden Ableitung der Ablauf des Kühlmittels aus dem Radkopf bei stehender Antriebswelle über die Durchtrittsöffnungen des Lamellenträgers, den Einlaufspalt des Förderspalts und den Ringspalt erfolgt (Anspruch 21).

Das Volumen des Kühlmittels läßt sich insgesamt zusätzlich dadurch anheben, daß die Ableitung und/oder der Ringspalt mit dem Innenraum eines Achskörpers in Verbindung steht. In diesem Fall dient der Achskörper gleichzeitig als Wärmetauscher zur Kühlung des Kühlmittels.

Weitere wesentliche Merkmale und die daraus resultierenden Vorteile gehen aus der nachfolgenden Erläuterung mehrer Ausführungsbeispiele der Erfindung anhand der Zeichnungen hervor. Es zeigen:
- Fig. 1: den in Längsrichtung einer Antriebswelle verlaufenden Schnitt durch einen Radkopf nach einem ersten Ausführungsbeispiel der Erfindung;
- Fig. 2: den Schnitt durch einen Lamellenträger;
- Fig. 3: eine mögliche Ausgestaltung eines Bauteils eines Lamellenträgers;
- Fig. 4: den Schnitt durch einen Radkopf nach einem weiteren Ausführungsbeispiel der Erfindung und

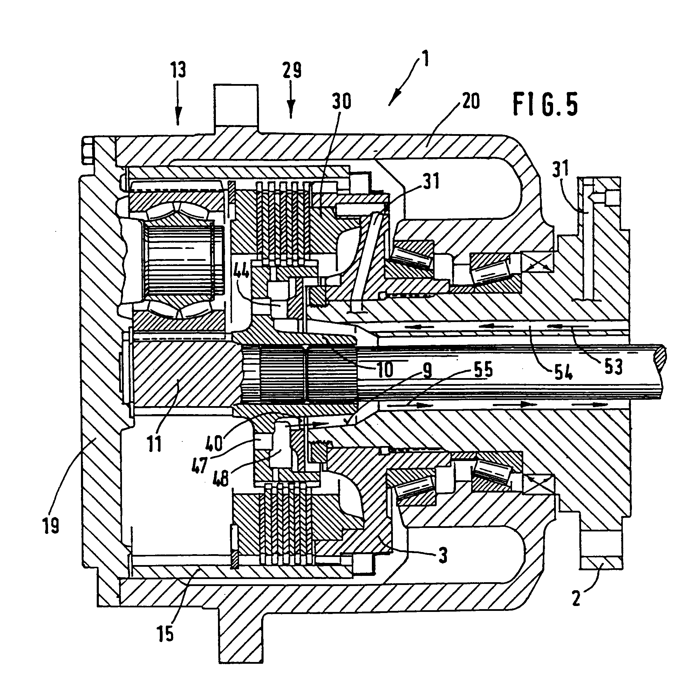

- Fig. 5: den baulich weiter vereinfachten Radkopf nach Fig. 4.

Der in der Zeichnung im Schnitt dargestellte Radkopf 1 ist Bestandteil einer selbst nicht dargestellten Achse eines Fahrzeugs, insbesondere eines schweren Radladers. Eine Hohlachse 2 ist mit einem Achskörper, der ebenfalls selbst nicht gezeichnet ist, fest verschraubt. Das äußere, in der Zeichnung links liegende Ende der Hohlachse 2 trägt einen Hohlradträger 3. Der Hohlradträger 3 ist mit der Hohlachse 2 über eine Mitnahmeverzahnung 4 drehfest verbunden und durch eine Mutter 5 axial gesichert.

Eine koaxiale Bohrung 6 der Hohlachse 2 wird von einer Antriebswelle 7 durchsetzt. Die Antriebswelle 7 steht mit einem selbst nicht dargestellten Achskegelrad eines Ausgleichsgetriebes in treibender Verbindung. Zwischen der Antriebswelle 7 und der Bohrung 6 der Hohlachse 2 wird ein Ringspalt 8 gebildet. Die Außenwandung des Ringspalts 8 (die mit der Mantelfläche der Bohrung 6 identisch ist) ist am äußeren - in der Zeichnung links liegenden - Ende mit einer kelchartigen Erweiterung 9 versehen.

Aus Montagegründen ist die Antriebswelle 7 im Bereich eines inneren Lamellenträgers 10 geteilt. Der außenliegende Abschnitt 11 der Antriebswelle 7 ist einstückig mit einer Sonne 12 eines Planetengetriebes 13 ausgebildet. Die Antriebswelle 7 ist mit dem außenliegenden Abschnitt 11 drehfest verbunden. Die drehfeste Verbindung erfolgt über gleichartig ausgebildete Mitnahmeverzahnungen 38.

Der Hohlradträger 3 ist an seinem Außenumfang mit einer weiteren Mitnahmeverzahnung 14 versehen. Über diese Mitnahmeverzahnung 14 stützt sich ein Hohlrad 15 des Planetengetriebes 13 auf dem Hohlradträger 3 ab. Das Hohlrad 15 ist mit einer Innenverzahnung 16 versehen. Mehrere Planetenräder 17, von denen in der Zeichnung lediglich eines dargestellt ist, greifen mit ihrer Außenverzahnung 18 in die Innenverzahnung 16 des Hohlrads 15 ein und stützen sich somit am Hohlrad 15 ab. Ferner werden die Planetenräder 17 von der Sonne 12 angetrieben.

Die Planetenräder 17 sind an einem Steg 19, der gleichzeitig die Funktion eines Deckels übernimmt, drehbar gelagert. Der Steg 19 ist mit einer Radnabe 20 drehfest verbunden. Die Radnabe 20 ist über Radlager 21 und 22 auf der Hohlachse 2 bzw. auf dem mit ihr drehfest verbundenen Hohlradträger 3 drehbar gelagert. Der Innenraum der Radnabe 20 ist nach außen mit Hilfe eines Dichtrings 23 abgedichtet.

Der Lamellenträger 10 weist auf der Seite, die dem Planetengetriebe 13 zugekehrt ist, einen Ringflansch 24 auf, der an seinem Außenumfang in einen Bund 25 übergeht, der dem Hohlradträger 3 zugekehrt ist und parallel zur Antriebswelle 7 gerichtet verläuft. Der Bund 25 hat eine Außenverzahnung 26, auf der innere Bremslamellen 27 in bekannter Weise aufgereiht sind. Zusammen mit äußeren Bremslamellen 28, die an der Innenverzahnung 16 des Hohlrads 15 abgestützt sind, wird eine Lamellenbremse 29 gebildet. Das Hohlrad 15 bildet einen äußeren Lamellenträger. Die Lamellenbremse 29 ist hydraulisch betätigbar. Hierzu ist ein Ringkolben 30 vorgesehen, über den die Lamellenbremse 29 durch Beaufschlagung mit Druckmittel, das in einer (teilweise dargestellten) Druckmittelleitung 31 geführt wird, im Schließsinne betätigt werden kann. Ist die Druckmittelleitung 31 drucklos, besorgen selbst nicht dargestellte Zugfedern die Rückstellung des Ringkolbens 30. Die inneren und äußeren Bremslamellen 27 und 28 der Lamellenbremse 29 stützen sich zudem axial an einer Endscheibe 32 ab, die mit Hilfe eines Sicherungsrings 33 innen am Hohlrad 15 gehaltert ist.

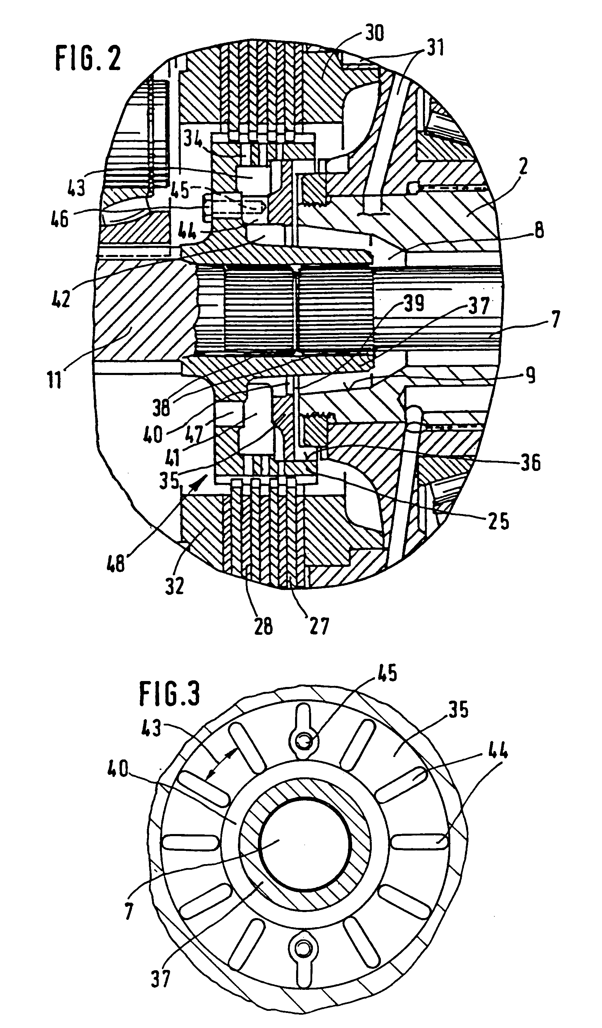

Die weitere Ausgestaltung und die Einbaulage des Lamellenträgers 10 in bezug auf den Ringspalt 8 ist der Zeichnung entsprechend Fig. 2 zu entnehmen. Der Bund 25 des Lamellenträgers ist mit radial verlaufenden Kanälen 34 versehen. Die Kanäle 34 sind so angeordnet, daß sie jeweils zwischen zwei benachbarten inneren Bremslamellen münden, das heißt auf jeweils eine Außenlamelle 28 gerichtet sind.

Der Lamellenträger 10 wird durch einen Ring 35 vervollständigt, der mit seinem Außendurchmesser in einer Eindrehung 36 am Bund 25 zentriert ist. Der Lamellenträger 10 ist daher aus zwei Bauteilen zusammengefügt. Der Lamellenträger 10 taucht mit einer Nabe 37 in die kelchartige Erweiterung 9 des Ringspalts 8 ein. Dem Ringspalt 8 liegt - unter Einhaltung eines geringen axialen Abstandes 39, bezogen auf die Längenerstreckung der Antriebswelle 7 - ein Einlaufspalt 40 gegenüber. Der Ringspalt 8 und der Einlaufspalt 40 sind vorzugsweise kongruent, um Verwirbelungen in der Übergangszone zwischen dem Ringspalt 8 und dem Einlaufspalt 40 zu vermeiden. Der Einlaufspalt 40 stellt den Beginn eines ringförmigen Förderspalts 41 dar. Der Förderspalt 41 weist einen - bezogen auf die Längenerstreckung der Antriebswelle 7 - im wesentlichen axial gerichteten Abschnitt 42 auf, der in einen radial gerichteten Abschnitt 43 übergeht. Letzterer wird an seinem außen liegenden Ende durch den Bund 25 des Lamellenträgers 10 begrenzt. Im Förderkanal 41 sind Förderelemente 44 angeordnet. Im vorliegenden Fall sind dies drei radial gerichtete Stege, die Bestandteil des Rings 35 sind und zueinander um jeweils 120° versetzt liegen (gesehen in Längsrichtung der Antriebswelle 7). Die im Förderspalt 41 angeordneten Förderelemente 44 übernehmen ferner die Funktion von Abstandshaltern, die die Innenweite des radial gerichteten Abschnitts 43 des Förderspalts 41 festlegen. Ferner sind die Förderelemente 44 mit Gewindebohrungen 45 versehen, die in der Zeichnung mit gestrichelten Linien angedeutet sind. In die Gewindebohrungen 45 sind Befestigungsschrauben 46 einschraubbar. Anstelle der Schraubverbindungen können die Bauteile des Lamellenträgers 10 z. B. auch durch Nieten miteinander verbunden sein.

Die Abbildung entsprechend Fig. 3 gibt schematisch eine weitere Möglichkeit der Ausgestaltung des Rings 35 des Lamellenträgers 10 wieder. Die Darstellung zeigt den Ring 35 in Draufsicht - gesehen von links nach rechts in Längsrichtung der Antriebswelle 7 nach Fig. 2. Dieser Ring 35 bildet im eingebauten Zustand ein Zellenrad. Hierzu weist der Ring 35 eine Vielzahl von radial gerichteten Förderelementen 44 auf. Es sind zwei diametral gegenüberliegende Gewindebohrungen 45 vorhanden, um den Ring 35 mit dem Lamellenträger 10 verbinden zu können.

Der Lamellenträger 10 weist auf der dem Einlaufspalt 40 gegenüberliegenden Seite Durchtrittsöffnungen 47 auf, die - bezogen auf die Längenerstreckung der Antriebswelle 7 - im wesentlichen axial oder unter einem spitzen Winkel in Richtung auf den Einlaufspalt 40 schräg geneigt verlaufen.

Die Reibflächen der inneren und äußeren Bremslamellen 27 bzw. 28 sind mit (nicht dargestellten) Vertiefungen versehen, die Durchlässe für das Kühlmittel bilden. Sie verlaufen - gesehen in Draufsicht auf die Reibflächen - radial oder gekrümmt so, daß in beiden Drehrichtungen der Lamellenbremse 29 eine Förderwirkung auf das Kühlmittel ausgeübt wird.

Aus dem erläuterten Aufbau des Lamellenträgers 10 wird ersichtlich, daß dieser als Förderrad 48 ausgebildet ist. Dieses läuft mit der Drehzahl der Antriebswelle 7 um und wird vom Kühlmittel axial angeströmt. Dies geschieht im Bereich des Ringspalts 8 beim Übertritt in den Einlaufspalt 40.

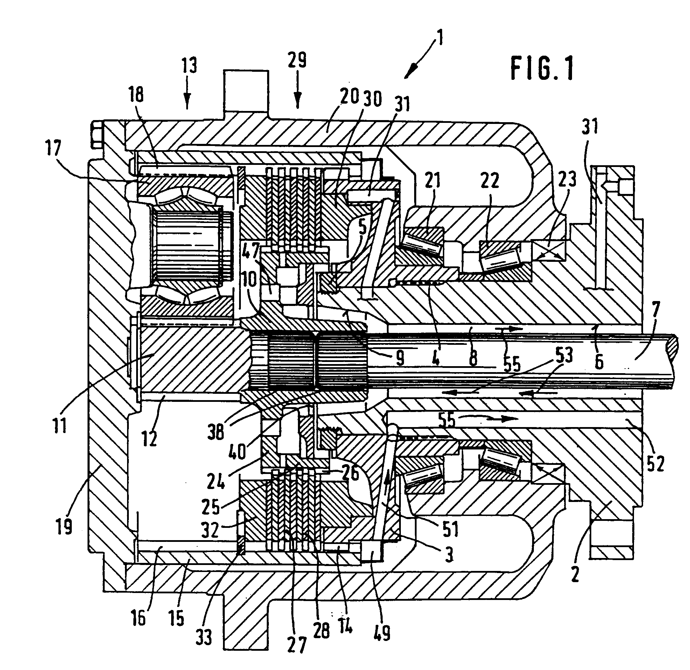

Bei den Ausführungsbeispielen entsprechend den Fig. 1 und 2 wird das vom Förderrad 48 geförderte Kühlmittel nach dem Passieren der inneren und äußeren Bremslamellen 27 bzw. 28 in einem Sammelring 49 gesammelt. Durchlässe 50 in der Außenverzahnung des Hohlradträgers 3 erleichtern den Abfluß des Kühlmittels in den Sammelring 49. Vom Sammelring 49 führt mindestens eine Ableitung 51 durch den Hohlradträger 3 zu einer weiteren Ableitung 52, die parallel zur Antriebswelle 7 gerichtet verläuft.

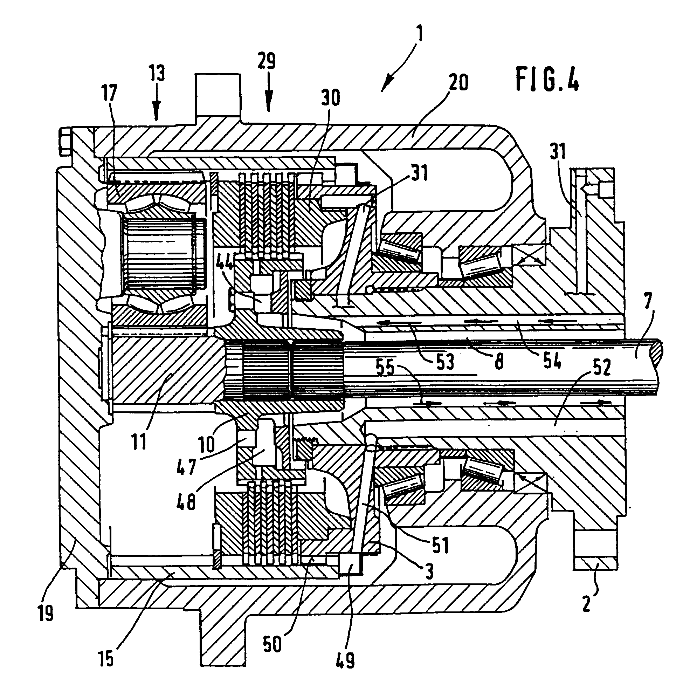

Bei dem Ausführungsbeispiel nach Fig. 1 bildet der Ringspalt die Zuleitung (Pfeile 53) für das Kühlmittel, das dem Förderrad 48 aus dem Innenraum der Achsbrücke zuläuft. Die Ableitung des Kühlmittels erfolgt über den Sammelring 49 und die Ableitung 51 bzw. 52. Bei der Konstruktion nach Fig. 4 erfolgt die Zuleitung (Pfeile 53) des Kühlmittels durch eine separate Bohrung 54 in der Hohlachse 2, die in den Ringspalt 8 im Bereich der kelchartigen Erweiterung 9 einmündet. Die Ableitung des Kühlmittels erfolgt über zwei getrennte Stränge. Neben der Ableitung des Kühlmittels über den Sammelring 49 und die Ableitung 51 bzw. 52 wird eine zusätzliche Ablaufmöglichkeit für das Kühlmittel durch die axial gerichteten Durchtrittsöffnungen 47 des Lamellenträgers 10 bereitgestellt. Bei stehendem Lamellenträger 10 bildet sich nämlich eine kurzgeschlossene Verbindung zwischen den Durchtrittsöffnungen 47 und dem Einlaufspalt 40 des Förderrads 48. Die Ableitung des Kühlmittels erfolgt hier zusätzlich über den Ringspalt 8, wie dies durch die Pfeile 55 kenntlich gemacht ist.

Bei dem Ausführungsbeispiel nach Fig. 4 wird die Ableitung des Kühlmittels ausschließlich über die Durchtrittsöffnungen 47, den Einlaufspalt 40 und den Ringspalt 8 vorgenommen. Bei dieser Lösung entfallen der Sammelring 49 und die Ableitung 51 bzw. 52.

Sämtliche Lösungen zeichnen sich durch die Gestaltung des Lamellenträgers 10 als Förderrad 48 aus. Das Förderrad 48 wird vom Kühlmittel axial angeströmt. Das Förderrad 48, das mit der Drehzahl der Antriebswelle 7 umläuft, bewirkt eine intensive Förderung des Kühlmittels. Die Förderung des Kühlmittels wird auch in den Randzonen der inneren und äußeren Bremslamellen 27 und 28 beibehalten, da auch diese eine Förderwirkung auf das Kühlmittel ausüben.

Die Ausbildung des Lamellenträgers 10 als Förderrad 48 hat neben einem hohen Durchsatz an Kühlmittel zur Folge, daß sich die Radnabe 20 fast vollständig mit Kühlmittel füllt. Zur Kühlung der Lamellenbremse steht somit ein großes Kühlmittelvolumen zur Verfügung. Vorteilhaft ist ferner, daß das Förderrad 48 in beiden Drehrichtungen des Lamellenträgers 10 Kühlmittel fördert. Eine schnelle Wärmeabfuhr aus dem Radkopf ist insbesondere dann gewährleistet, wenn die Ableitung des Kühlmittels - wie vorstehend erläutert - über zwei getrennte Stränge erfolgt.

### Bezugszeichen

- 1: Radkopf
- 2: Hohlachse
- 3: Hohlradträger
- 4: Mitnahmeverzahnung
- 5: Mutter
- 6: Bohrung
- 7: Antriebswelle
- 8: Ringspalt
- 9: Erweiterung
- 10: innerer Lamellenträger
- 11: Abschnitt
- 12: Sonne
- 13: Planetengetriebe
- 14: Mitnahmeverzahnung
- 15: äußerer Lamellenträger, Hohlrad
- 16: Innenverzahnung
- 17: Planeten räder
- 18: Außenverzahnung
- 19: Steg
- 20: Radnabe
- 21: Radlager
- 22: Radlager
- 23: Dichtring
- 24: Ringflansch
- 25: Bund
- 26: Außenverzahnung
- 27: innere Bremslamellen
- 28: äußere Bremslamellen
- 29: Lamellenbremse
- 30: Ringkolben
- 31: Druckmittelleitung
- 32: Endscheibe
- 33: Sicherungsring
- 34: Kanäle
- 35: Ring
- 36: Eindrehung
- 37: Nabe
- 38: Mitnahmeverzahnung
- 39: axialer Abstand
- 40: Einlaufspalt
- 41: Förderspalt
- 42: axial gerichteter Abschnitt
- 43: radial gerichteter Abschnitt
- 44: Förderelemente
- 45: Gewindebohrungen
- 46: Befestigungsschrauben
- 47: Durchtrittsöffnungen
- 48: Förderrad
- 49: Sammelring
- 50: Durchlässe
- 51: Ableitung
- 52: Ableitung
- 53: Zuleitung
- 54: Bohrung
- 55: Ableitung

## Patentansprüche

1. Flüssigkeitsgekühlte Lamellenbremse (29), bei der auf einer Antriebswelle (7) ein innerer Lamellenträger (10) drehfest zur Abstützung von inneren Bremslamellen (27) gelagert ist und äußeren Bremslamellen (28), die an einem äußeren Lamellenträger (15) abgestützt sind, einer zum inneren Lamellenträger, der als Förderrad (48) ausgebildet ist, führenden Zuleitung (53) für Kühlmittel, das durch radial verlaufende Kanäle (34) des inneren Lamellenträgers (10) den inneren und äußeren Bremslamellen (27, 28) zuströmt und über eine Ableitung (51, 52) des äußeren Lamellenträgers (15) abfließt, dadurch **gekennzeichnet,** daß die Zuleitung (53) als Ringspalt (8) ausgebildet ist und der Lamellenträger (10) einen dem Ringspalt (8) im wesentlichen gleich ausgebildeten Einlaufspalt (40) aufweist, der - bezogen auf eine Längsmittelebene der Antriebswelle - dem Ringspalt (8) mit geringem Abstand (3) gegenüberliegt, so daß das Förderrad (48) vom Kühlmittel im Bereich der Antriebswelle (7) - bezogen auf deren Längenerstreckung - axial angeströmt ist.

2. Lamellenbremse nach Anspruch 1, dadurch **gekennzeichnet,** daß der Einlaufspalt (40) den Beginn eines ringförmigen Förderspalts (41) des Förderrads (48) bildet, der einen - bezogen auf die Längenerstreckung der Antriebswelle - im wesentlichen axial gerichteten Abschnitt (42) aufweist, der in einen radial gerichteten Abschnitt (43) übergeht, der an seinem außenliegenden Ende durch einen Bund (25) des Lamellenträgers (10) begrenzt wird, wobei die radial verlaufenden Kanäle (34) den Bund (25) durchsetzen.

3. Lamellenbremse nach den Ansprüchen 1 und 2, dadurch **gekennzeichnet,** daß im Förderspalt (41) Förderelemente (44) angeordnet sind, die radial gerichtet verlaufen.

4. Lamellenbremse nach den Ansprüchen 1 bis 3, dadurch **gekennzeichnet,** daß der Lamellenträger (10) aus zwei Bauteilen (10, 24, 25 und 35) zusammengefügt ist, die in der Weise miteinander verbunden sind, daß - bezogen auf die Längenerstreckung der Antriebswelle - ihr axialer Abstand voneinander durch Abstandshalter, die die Innenweite des radial gerichteten Abschnitts (43) des Förderspalts (41) bestimmen, festgelegt ist.

5. Lamellenbremse nach den Ansprüchen 3 und 4, dadurch **gekennzeichnet,** daß die Förderelemente (44) als Abstandshalter ausgebildet sind.

6. Lamellenbremse nach den Ansprüchen 3 bis 5, dadurch **gekennzeichnet,** daß die Förderelemente (44) Gewindebohrungen (45) aufweisen, in die Befestigungsschrauben (46) einschraubbar sind.

7. Lamellenbremse nach Anspruch 1, dadurch **gekennzeichnet,** daß ein Bauteil des Lamellenträgers (10) ein Ring (35) ist, der mit seinem Außendurchmesser in einer Eindrehung (36) am Bund (25) des Lamellenträgers (10) zentriert ist und dessen Innendurchmesser mit dem Außendurchmesser des Einlaufspalts (40) identisch ist.

8. Lamellenbremse nach den Ansprüchen 3 bis 5 und 7, dadurch **gekennzeichnet,** daß die Förderelemente (44) mit dem Ring (35) ein gemeinsames Bauteil bilden.

9. Lamellenbremse nach den Ansprüchen 1 und 2, dadurch **gekennzeichnet,** daß der Lamellenträger (10) auf der dem Einlaufspalt (40) gegenüberliegenden Seite Durchtrittsöffnungen (47) aufweist, die - bezogen auf die Längenerstreckung der Antriebswelle - im wesentlichen axial gerichtet verlaufen.

10. Lamellenbremse nach Anspruch 9, dadurch **gekennzeichnet,** daß die Durchtrittsöffnungen (47) unter einem spitzen Winkel in Richtung auf den Einlaufspalt (40) schräg geneigt verlaufen.

11. Lamellenbremse nach Anspruch 10, dadurch **gekennzeichnet,** daß der Gesamtquerschnitt der Durchtrittsöffnungen (47) im wesentlichen dem Querschnitt des Einlaufspalts (40) entspricht.

12. Lamellenbremse nach den Ansprüchen 1 und 2, dadurch **gekennzeichnet,** daß die Kanäle (34) - bezogen auf eine Längsmittelebene der Antriebswelle - zwischen jeweils zwei benachbarten inneren Bremslamellen (27) auf die Außenlamellen (28) gerichtet - münden.

13. Lamellenbremse nach den Ansprüchen 1, 2 und 3 sowie 12, dadurch **gekennzeichnet,** daß die Reibflächen der inneren und/oder äußeren Bremslamellen (27, 28) mit nutenförmigen Vertiefungen versehen sind, die - gesehen in Draufsicht auf die Reibflächen - radial oder gekrümmt in der Weise verlaufen, daß in beiden Drehrichtungen der Lamellenbremse (29) eine Förderwirkung auf das Kühlmittel ausgeübt wird.

14. Lamellenbremse innerhalb eines Radkopfes, dessen Hohlradträger (3) mit einer Außenverzahnung (14) formschlüssig in eine Innenverzahnung (16) eines Hohlrads (15) eingreift, nach den Ansprüchen 1, 2, 12 und 13, dadurch **gekennzeichnet,** daß die Außenverzahnung (14) in Längsrichtung verlaufende und am Umfang verteilte Durchlässe (50) für das Kühlmittel aufweist.

15. Lamellenbremse nach Anspruch 14, dadurch **gekennzeichnet,** daß die Durchlässe (50) in einen Sammelring (49) münden, der mit der Ableitung (51, 52) für das Kühlmittel verbunden ist.

16. Lamellenbremse nach Anspruch 15, dadurch **gekennzeichnet,** daß der Sammelring (49) durch eine Stirnfläche des Hohlrads (15), einer Mantelfläche des Hohlradträgers (3) und einem äußeren Ring gebildet ist.

17. Lamellenbremse nach den Ansprüchen 1 und 2, dadurch **gekennzeichnet,** daß eine Außenwandung (6) des Ringspalts (8) in Richtung auf den Lamellenträger (10) kelchartig (bei 9) erweitert ist.

18. Lamellenbremse nach Anspruch 1, dadurch **gekennzeichnet,** daß ausschließlich der Ringspalt (8) die Zuleitung (53) des Kühlmittels bildet.

19. Lamellenbremse nach Anspruch 1, dadurch **gekennzeichnet,** daß mindestens eine parallel zur Antriebswelle (7) verlaufende Zuleitung (54) für das Kühlmittel in den Ringspalt (18) mündet.

20. Lamellenbremse nach den Ansprüchen 1 und 2 und 9, dadurch **gekennzeichnet,** daß der Ablauf des Kühlmittels bei stehender Antriebswelle (7) außer über die Ableitung (51, 52) über die Durchtrittsöffnungen (47) des Lamellenträgers (10), den Einlaufspalt (40) des Förderspalts (41) und den Ringspalt (8) erfolgt.

21. Lamellenbremse nach den Ansprüchen 1 und 2 und 9, dadurch **gekennzeichnet,** daß der Ablauf (55) des Kühlmittels bei stehender Antriebswelle (7) über die Durchtrittsöffnungen (47) des Lamellenträgers (10), den Einlaufspalt (40) des Förderspalts (41) und den Ringspalt (8) erfolgt.

22. Lamellenbremse nach den Ansprüchen 20 oder 21, dadurch **gekennzeichnet,** daß die Ableitung (51, 52) und/oder der Ringspalt (8) mit dem Innenraum einer Achskörpers in Verbindung steht.

23. Lamellenbremse nach mindestens einem der vorhergehenden Ansprüche 1 bis 22, dadurch **gekennzeichnet,** daß die Lamellenbremse (29) und ein Planetengetriebe (13) gemeinsam in einem Radkopf (1) innerhalb einer Radnabe (20) angeordnet sind.

## Claims

1. Liquid-cooled multiple-disk brake (29), in which an inner brake disk carrier (10) is supported on a drive shaft (7) in a non-rotatable manner for supporting inner brake disks (27), and outer brake disks (28), which are supported on an outer brake disk carrier (15), a supply line (53) for coolant leading to the inner brake disk carrier which takes the form of a feed wheel (48), said coolant flowing through radially extending channels (34) of the inner brake disk carrier (10) to the inner and outer brake disks (27, 28) and flowing off through a discharge line (51, 52) of the outer brake disk carrier (15), characterized in that the supply line (53) takes the form of an annular gap (8) and the brake disk carrier (10) has an inlet gap (40), which is constructed in a substantially identical manner to the annular gap (8) and lies - in relation to a longitudinal centre plane of the drive shaft - with a slight clearance (3) opposite the annular gap (8) so that the coolant flows in the region of the drive shaft (7) - in relation to the longitudinal extension of said shaft - axially against the feed wheel (48).

2. Multiple-disk brake according to claim 1, characterized in that the inlet gap (40) forms the start of an annular feed gap (41) of the feed wheel (48) which has an - in relation to the longitudinal extension of the drive shaft - substantially axially directed portion (42) verging into a radially directed portion (43), which is delimited at its outer-lying end by a collar (25) of the brake disk carrier (10), the radially extending channels (34) penetrating the collar (25).

3. Multiple-disk brake according to claims 1 and 2, characterized in that disposed in the feed gap (41) are feed elements (44) which extend in a radial direction.

4. Multiple-disk brake according to claims 1 to 3, characterized in that the brake disk carrier (10) is made up of two structural parts (10, 24, 25 and 35) which are so connected to one another that - in relation to the longitudinal extension of the drive shaft - their axial distance from one another is fixed by means of spacers which determine the internal diameter of the radially directed portion (43) of the feed gap (41).

5. Multiple-disk brake according to claims 3 and 4, characterized in that the feed elements (44) take the form of spacers.

6. Multiple-disk brake according to claims 3 to 5, characterized in that the feed elements (44) have threaded bores (45), into which fastening screws (46) may be screwed.

7. Multiple-disk brake according to claim 1, characterized in that one structural part of the brake disk carrier (10) is a ring (35), which is centred with its external diameter in a turned groove (36) on the collar (25) of the brake disk carrier (10) and whose internal diameter is identical to the external diameter of the inlet gap (40).

8. Multiple-disk brake according to claims 3 to 5 and 7, characterized in that the feed elements (44) with the ring (35) form a common structural part.

9. Multiple-disk brake according to claims 1 and 2, characterized in that the brake disk carrier (10) has, at its end opposite the inlet gap (40), through openings (47) which extend - in relation to the longitudinal extension of the drive shaft - in a substantially axial direction.

10. Multiple-disk brake according to claim 9, characterized in that the through openings (47) extend obliquely at an acute angle towards the inlet gap (40).

11. Multiple-disk brake according to claim 10, characterized in that the total cross-section of the through openings (47) substantially corresponds to the cross-section of the inlet gap (40).

12. Multiple-disk brake according to claims 1 and 2, characterized in that the channels (34) each open - in relation to a longitudinal centre plane of the drive shaft - between two adjacent inner brake disks (27) towards the outer brake disks (28).

13. Multiple-disk brake according to claims 1, 2 and 3 as well as 12, characterized in that the friction surfaces of the inner and/or outer brake disks (27, 28) are provided with groove-like recesses which - in a plan view of the friction surfaces - extend radially or in a curved manner such that, in both directions of rotation of the multiple-disk brake (29), a feed action is exerted upon the coolant.

14. Multiple-disk brake inside a wheel head, whose ring gear carrier (3) engages with an external gearing (14) positively into an internal gearing (16) of a ring gear (15), according to claims 1, 2, 12 and 13, characterized in that the external gearing (14) has passages (50) for the coolant, which extend in a longitudinal direction and are distributed over the periphery.

15. Multiple-disk brake according to claim 14, characterized in that the passages (50) open into a collecting ring (49) which is connected to the discharge line (51, 52) for the coolant.

16. Multiple-disk brake according to claim 15, characterized in that the collecting ring (49) is formed by an end face of the ring gear (15), a lateral surface of the ring gear carrier (3) and an outer ring.

17. Multiple-disk brake according to claims 1 and 2, characterized in that an outer wall (6) of the annular gap (8) is widened like a goblet (at 9) towards the brake disk carrier (10).

18. Multiple-disk brake according to claim 1, characterized in that it is exclusively the annular gap (8) which forms the supply line (53) of the coolant.

19. Multiple-disk brake according to claim 1, characterized in that at least one supply line (54) for the coolant extending parallel to the drive shaft (7) opens into the annular gap (8).

20. Multiple-disk brake according to claims 1 and 2 and 9, characterized in that the discharge of the coolant when the drive shaft (7) is stationary is effected, besides via the discharge line (51, 52), via the through openings (47) of the brake disk carrier (10), the inlet gap (40) of the feed gap (41) and the annular gap (8).

21. Multiple-disk brake according to claims 1 and 2 and 9, characterized in that the discharge (55) of the coolant when the drive shaft (7) is stationary is effected via the through openings (47) of the brake disk carrier (10), the inlet gap (40) of the feed gap (41) and the annular gap (8).

22. Multiple-disk brake according to claims 20 or 21, characterized in that the discharge line (51, 52) and/or the annular gap (8) is connected to the interior of an axle element.

23. Multiple-disk brake according to at least one of the preceding claims 1 to 22, characterized in that the multiple-disk brake (29) and a planetary gearing (13) are jointly disposed in a wheel head (1) inside a wheel hub (20).

## Revendications

1. Frein à disques multiples (29) refroidi par un liquide, dans lequel un porte-disques intérieur (10) est monté sur un arbre d' entraînement (7) de manière à tourner avec lui pour épauler des disques intérieurs de frein (27), et comportant des disques extérieurs de frein (28) qui sont épaulés par un porte-disques extérieur (15), le porte-disques intérieur étant agencé en roue de pompe (48) à laquelle un conduit d'amenée (53) amène un réfrigérant qui coule à travers des canaux radiaux (34) du porte-disques intérieur (10) pour atteindre les disques intérieurs et extérieurs (27, 28) du frein et qui s'évacue par un conduit d'évacuation (51, 52) du porte-disques extérieur (15), **caractérisé** en ce que le conduit d'amenée (53) est formé par un passage annulaire (8) et en ce que le porte-disques (10) comporte un canal d'admission en forme de fente (40) qui présente sensiblement la même configuration que le passage annulaire (8) et qui - par rapport à un plan médian longitudinal de l'arbre d'entraînement - se trouve à une faible distance (39) en face du passage annulaire (8), de sorte que le réfrigérant entre axialement - par rapport à la direction longitudinale de l'arbre - dans la roue de pompe (48) à proximité de l'arbre d'entraînement (7).

2. Frein selon la revendication 1, **caractérisé** en ce que le canal d'admission (40) constitue le début d'un canal annulaire de refoulement en forme de fente (41) de la roue de pompe (48), lequel comporte - par rapport à la direction longitudinale de l'arbre - un tronçon (42) orienté sensiblement axialement et se raccordant à un tronçon (43) orienté radialement qui est délimité par un collet (25) du porte-disques (10) à son extrémité extérieure, le collet (25) étant traversé par lesdits canaux radiaux (34).

3. Frein selon les revendications 1 et 2, **caractérisé** en ce que le : canal de refoulement (41) contient des éléments de refoulement (44) qui sont orientés radialement.

4. Frein selon les revendications 1 à 3, **caractérisé** en ce que le porte-disques (10) se compose de deux éléments (10, 24, 25 et 35) liés l'un à l'autre de telle manière que - par rapport à la direction longitudinale de l'arbre - leur espacement axial mutuel est maintenu au moyen d' entretoises qui déterminent la largeur intérieure du tronçon orienté radialement (43) du canal de refoulement (41).

5. Frein selon les revendications 3 et 4, **caractérisé** en ce que les éléments de refoulement (44) sont agencés en entretoises.

6. Frein selon les revendications 3 à 5, **caractérisé** en ce que les éléments de refoulement (44) comportent des alésages filetés (45) dans lesquels sont vissées des vis de fixation (46).

7. Frein selon la revendication 1, **caractérisé** en ce qu'un élément du porte-disques (10) est un anneau (35) qui est centré par son diamètre extérieur dans une ouverture tournée (36) du collet (25) du porte-disques (10) et dont le diamètre intérieur est identique au diamètre extérieur du canal d'admission (40).

8. Frein selon les revendications 3 à 5 et 7, **caractérisé** en ce que les éléments de refoulement (44) constituent un élément commun avec l'anneau (35).

9. Frein selon les revendications 1 et 2, **caractérisé** en ce que le porte-disques (10) comporte, du côté opposé au canal d'admission (40), des orifices de passage (47) qui, par rapport à la direction longitudinale de l'arbre, sont orientés sensiblement axialement.

10. Frein selon la revendication 9, **caractérisé** en ce que les orifices de passage (47) sont inclinés sous un angle aigu en direction du canal d'admission (40).

11. Frein selon la revendication 10, **caractérisé** en ce que la section transversale totale des orifices de passage (47) correspond sensiblement à la section transversale du canal d'admission (40).

12. Frein selon les revendications 1 et 2, **caractérisé** en ce que les canaux (34) - par rapport à un plan longitudinal médian de l'arbre - débouchent chacun entre deux disques intérieurs voisins (27) en direction des disques extérieurs (28).

13. Frein selon les revendications 1, 2 et 3 ainsi que 12, **caractérisé** en ce que les surfaces de friction des disques intérieurs et/ou extérieurs de frein (27, 28) présentent des creux en forme de rainures qui - en vue de face des surfaces de friction - ont un tracé radial ou incurvé de manière à exercer un effet de pompage du réfrigérant dans les deux sens de rotation du frein à disques multiples (29).

14. Frein à disques multiples à l'intérieur d'un moyeu de roue dont un porte-couronne (3) est engagé positivement par une denture extérieure (14) dans une denture intérieure (16) d'une couronne d'engrenage (15), selon les revendications 1, 2, 12 et 13, **caractérisé** en ce que la denture extérieure (14) comporte des passages de réfrigérant (50) qui sont orientés longitudinalement et répartis sur la circonférence.

15. Frein selon la revendication 14, **caractérisé** en ce que lesdits passages (50) débouchent dans un collecteur annulaire (49) raccordé au conduit d'évacuation (51, 52) du réfrigérant.

16. Frein selon la revendication 15, **caractérisé** en ce que le collecteur annulaire (49) est défini par une surface frontale de la couronne (15), une surface périphérique du porte-couronne (3) et un anneau extérieur.

17. Frein selon les revendications 1 et 2, **caractérisé** en ce qu'une paroi extérieure (6) du passage annulaire (8) est évasée en forme de calice (en 9) en direction du porte-disques (10).

18. Frein selon la revendication 1, **caractérisé** en ce que le passage annulaire (8) constitue le seul conduit d'amenée (53) du réfrigérant.

19. Frein selon la revendication 1, **caractérisé** en ce qu'au moins un conduit d'amenée de réfrigérant (54), s'étendant parallèlement à l'arbre d'entraînement (7), débouche dans le passage annulaire (8).

20. Frein selon les revendications 1 et 2 et 9, **caractérisé** en ce que l'évacuation du réfrigérant, lorsque l'arbre (7) est arrêté, s'effectue, hormis par le conduit d'évacuation (51, 52), à travers les orifices de passage (47) du porte-disques (10), le canal d'admission (40) du canal de refoulement (41) et le passage annulaire (8).

21. Frein selon les revendications 1 et 2 et 9, **caractérisé** en ce que l'évacuation (55) du réfrigérant, lorsque l'arbre (7) est arrêté s'effectue, à travers les orifices de passage (47) du porte-disques (10), le canal d'admission (40) du canal de refoulement (41) et le passage annulaire (8).

22. Frein selon la revendication 20 ou 21, **caractérisé** en ce que le conduit d'évacuation (51, 52) et/ou le passage annulaire (8) sont en communication avec l'intérieur d'un corps d'essieu.

23. Frein selon au moins l'une des revendications précédentes 1 à 22, **caractérisé** en ce que le frein (29) et un engrenage planétaire (13) sont disposés ensemble à l'intérieur d'un corps de moyeu (20) dans un moyeu de roue (1).
